# EUROPÄISCHE PATENTSCHRIFT

(11) **EP 2 263 439 B1**
(45) Veröffentlichungstag und Bekanntmachung des Hinweises auf die Patenterteilung: **16.01.2013**
(21) Anmeldenummer: 10006285.0
(22) Anmeldetag: 17.06.2010
(51) Int. Cl.: A01D 43/02, A01B 45/00

(54) **Landschaftspflegegerät**
Landscape care device
Appareil d'entretien paysager

(30) Priorität: 18.06.2009 DE 102009029805
(43) Veröffentlichungstag der Anmeldung: 22.12.2010
(73) Patentinhaber: Tielbürger, Dirk, 32369 Rahden (DE)
(72) Erfinder: Tielbürger, Dirk, 32369 Rahden (DE)
(74) Vertreter: Engelmann, Kristiana

(56) Entgegenhaltungen:
- US-A- 2 143 402
- US-A- 4 317 327
- US-A1- 2006 236 670

## Beschreibung

Die Erfindung betrifft ein Landschaftspflegegerät in Form eines Rasentraktors, einer Kehrmaschine gemaß dem Oberbegriff des Anspruchs 1.

Mit einem Elektro- oder Benzinmotor angetriebene Maschinen zur Rasenbearbeitung sind in unterschiedlichen Ausführungen bekannt. Diese motorgetriebenen Rasentraktoren, Kehrmaschinen o. dgl. sind mit entsprechenden Pflegewerkzeugen bestückt (US 2,143,402). Bei den insbesondere als Aufsitz-Geräte ausgebildeten Maschinen sind in kombinierter Ausführung jeweilige Frontmähwerke mit einem Mulchmähwerk o. dgl. kombiniert anwendbar. Bekannte Rasentraktoren sind ebenfalls mit einem Mittefmähwerk ausgestattet, das wahlweise mit einem Seitenauswurf, einem Heckauswurf und/oder einer Mulchfunktion zusammenwirken kann.

Bei sämtlichen dieser als Mulchmäher bezeichneten Maschinen wird der Rasen geschnitten und das Schnittgut verbleibt auf der Nutzfläche zur Verrottung. Bei Mittelmähwerken wird der Rasen geschnitten und das Schnittgut in den Auffangbehälter befördert. Wenn zusätzlich zum Mittelmähwerk ein Mulchmesser an der Maschine vorgesehen ist, gelangt eine größere Schnittmenge in den Auffangbehälter. In jedem Falle verbleiben Kleinstteile des Schnittgutes auf dem Rasen und dieser kann durch Staunässe und Trockenheit einen Rasenfilz bzw. Mooslagen bilden, wozu dann ein zusätzlicher Vertikutiervorgang auszuführen ist.

Aus US 4,317,327 ist ein Rasenmäher bekannt, bei dem zwischen einem Stützrad des Mährahmens und einem vorgelagerten Führungsrad eine Vertikutiervorrichtung vorgesehen ist. Ein ähnliches System ist in US 2006/0236670 A1 gezeigt, wobei der Vertikutierer ebenfalls über zwei parallele Tragarme am Mährahmen angreift und vordere Stützräder vorgesehen sind.

Bekannt sind auch Rasentraktoren mit Anhänge-Vertikutierer, wobei dieser einen zusätzlichen Antriebsmotor aufweist, der den Aufwand des Systems wesentlich erhöht. Bekannt sind auch einfache gezogene Harken-Aggregate, mit denen der Rasen ausgekämmt wird. Danach ist jedoch in einem zweiten separaten Arbeitsgang ein Rasentraktor einzusetzen, um das ausgekämmte Gut in einen Sammelbehälter zu fördern, so dass auch hier eine Bearbeitung mit nachteilig hohem Aufwand festzustellen ist.

Gemäß einem weiteren Vorschlag ist vorgesehen, einen Rasentraktor als Rasenkehrmaschine einzusetzen, wobei diese hinter dem jeweiligen Mähwerk angeordnet ist. Diese "Kehrmaschine" löst gleichzeitig den Rasenfilz und das Moos, wobei dessen nachträgliches Einsammeln zusätzlichen Aufwand bringt. An diesen Rasentraktoren kann in Heckanbau auch ein Vertikutierer angebaut werden, so dass eine rückseitige Kombination mit einem Sammelbehälter zwar möglich ist, der hohe technische Aufwand aber oft nicht gerechtfertigt ist.

Bekannt ist auch ein Rasentraktor mit Mittelmähwerk, an den eine zusätzliche Maschine mit einem zweiten Motor angekoppelt werden kann, so dass eine 2-Motoren-Einheit mit nachteilig hohem technischem Aufwand zu bedienen ist. Auch bekannt ist ein System, bei dem direkt am Mähwerk mehrere Federzinken angeordnet sind, so dass diese nur gemeinsam mit dem Mähwerk einstellbar sind und die Bearbeitung wenig wirksam ist.

Die Erfindung befasst sich mit dem Problem, ein Landschaftspflegegerät zu schaffen, mit dem durch ein Zusammenwirken zweier Bearbeitungswerkzeuge eine permanente Entfernung zusätzlich erfassbarer Boden- bzw. Pflanzenteilen möglich ist und so mit geringem technischem Aufwand in einer ersten Phase erfasstes Moos o. dgl. Teile gemeinsam mit dem Trenngut des zweiten Werkzeuges in einen Auffangbehälter überführbar bzw. entsorgbar sind.

Die Erfindung löst dieses Problem mit einer Rasenbearbeitungsmaschine mit den Merkmalen des Anspruchs 1. Weitere vorteilhafte Ausgestaltungen ergeben sich aus den Ansprüchen 2 bis 18.

Eine als Rasentraktor ausgebildete Rasenbearbeitungsmaschine weist ein Mähwerk als erstes Werkzeug und einen an sich bekannten Vertikutierer als zweites Werkzeug auf. Bei einer diese beiden an sich bekannten Baugruppen aufweisenden Konstruktion ist in einer erfindungsgemäßen Kombination vorgesehen, im Bereich einer vorderseitigen Standard-Kupplung einen als Federzinkenharke ausgebildeten Vertikutierer mit der Maschine zu verbinden. Dieses überraschend einfache System der zwei mit optimalem Abstand und ohne zusätzlichen Hilfsantrieb nacheinander am Boden wirksamen Werkzeuge erreicht eine optimale Pflege bereits dann, wenn die Federzinkenharke als "geschobene" Einheit geradlinig bewegt wird und damit die nur federn verlagerbaren Federzinken entsprechend ihrer Anordnung, Federsteife und/oder Eingriffsparameter im Bodenbereich optimal wirken können. Mit dieser Anordnung der Federzinken vor dem Anwendungsbereich des angetriebenen Mähwerkes o. dgl. Werkzeug wird eine permanente Vertikutierung möglich, und damit kann weitgehend ohne zusätzliche Antriebsleistung eine "vorgeschaltete" Auflockerung des Rasens o. dgl. Bodenstrukturen erfolgen.

Die Federzinkenharke ist so aufgebaut, dass zusätzlich zum vorgesehenen Rasen-Schnitt als Haupt-Bearbeitungsphase jeweilige in den Boden eingedrückte Federzinken den Rasenfilz bzw. Moosreste auskämmen und vor dem Mähwerk auf den Rasen befördern. Durch den nachfolgenden Wirkeingriff von Mähwerkzeugen wird das vorbearbeitete Restmaterial gemeinsam mit dem Rasen als Schnittgut erfasst, so dass die Rasenfläche in einem Arbeitsgang vertikutiert, geschnitten und durch Verlagerung des Schnittgutes in den Sammelbehälter auch eine gesäubert Rasenfläche erreicht ist.

Bei diesem kombinierten System werden die Vorteile einer an sich bekannten Standard-Schnellkupplung der Maschine genutzt, so dass die Federzinkenharke in Einbaulage vor der jeweiligen Vorderachse der Maschine positioniert ist und ohne zusätzlichen Antrieb den Rasen "kämmt". Im Bereich dieser vorderseitigen Kupplung ist ein Stütz-Parallelogramm wirksam, so dass in sämtlichen Phasen der Vertikutierung Unebenheiten des Bodens mit geringem Aufwand ausgeglichen werden. Die Stellung der Federzinken ist in Bezug auf ihre Winkelstellung zum Boden jeweils optimal. In zweckmäßiger Ausführung ist die Federzinkenharke durch eine zusätzliche Rad-Abstützung auf dem Boden geführt. Dabei sind zwei auf einer Wellenachse angebrachte Räder vorgesehen, deren Raddurchmesser die jeweilige Arbeitstiefe für die Federzinken so vorgibt, dass eine an die jeweiligen Bodenbedingungen anpassbare Bearbeitungstiefe einstellbar ist.

Die für die Konstruktion einsetzbaren Federzinken sind als einstückige Bauteile vorgesehen, wobei zur Festlegung dieser Federzinken an einem Halter in Form eines Stützbalkens jeweilige Durchgriffs- und Fixieröffnungen so vorgesehen sind, dass eine kraft- und formschlüssige Fixierung möglich wird. Damit sind zusätzliche Halteelemente in Form von Schrauben, Nieten o. dgl. entbehrlich, und die Montage bzw. Demontage der Federzinken ist auch von wenig geübten Nutzern ausführbar.

Weitere Einzelheiten und Vorteile der Erfindung ergeben sich aus der nachfolgenden Beschreibung und der Zeichnung, in der ein Ausführungsbeispiel der erfindungsgemäßen Rasenbearbeitungsmaschine näher veranschaulicht ist. In der Zeichnung zeigen:
- Fig. 1: eine perspektivische Prinzipdarstellung des als Federzinkenharke ausgebildeten Vertikutierers erfindungsgemäßer Ausführung,
- Fig. 2 bis Fig. 4: jeweilige Ansichten der in Einbaulage befindlichen Federzinken- harke,
- Fig. 5: eine teilweise geschnittene Seitenansicht eines Rasentraktors mit vorgeordneter Federzinkenharke, und
- Fig. 6: eine die Einzelteile im Bereich der Federzinkenharke verdeut- lichende Explosivdarstellung.

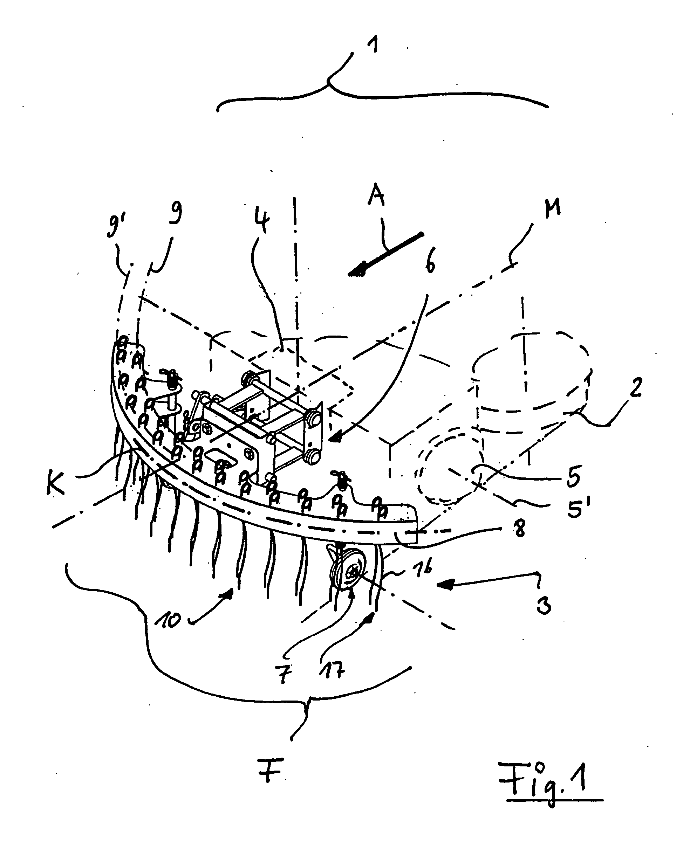

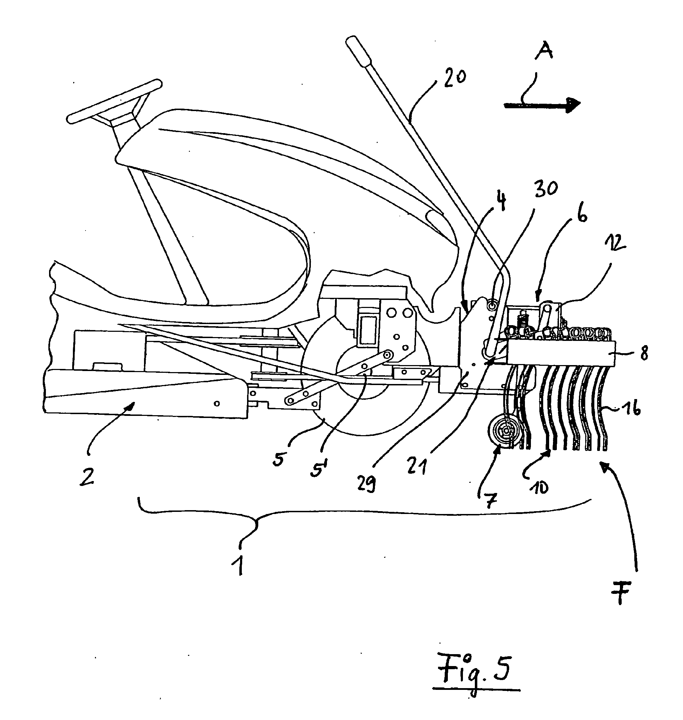

In Fig. 1 ist in einer schematischen Perspektivdarstellung ein insgesamt mit 1 bezeichnetes Landschaftspflegegerät dargestellt, das in Form eines Rasentraktors, einer Kehrmaschine o. dgl. Konstruktionen von Rasenbearbeitungsmaschinen (Fig. 5) vorgesehen sein kann. Derartige Maschinen weisen ein insbesondere als angetriebenes Mähwerk 2 ausgebildetes erstes Pflegewerkzeug auf, und in dieses Maschinenkonzept ist zumindest ein zweites, gleichzeitig oder zeitversetzt zum ersten Pflegewerkzeug 2 einsetzbares Pflegewerkzeug 3 vorgesehen. Für die Anwendung der Maschine zur Rasenbearbeitung kann als zweites Pflegewerkzeug 3 insbesondere ein Vertikutierer vorgesehen sein.

Das erfindungsgemäße Konzept sieht vor, dass die Maschine 1 im Bereich vor dem Mähwerk 2 mit zumindest einem als Federzinkenharke F ausgebildeten Vertikutierer 3 versehen ist. Diese auf eine jeweilige Anbaulage an der Maschine 1 abgestimmte Baueinheit ist effizient dann wirksam, wenn eine Abstützung der Harke F an einer vorderseitigen Position realisiert wird, wie dies Fig. 1 und Fig. 5 prinzipiell verdeutlichen.

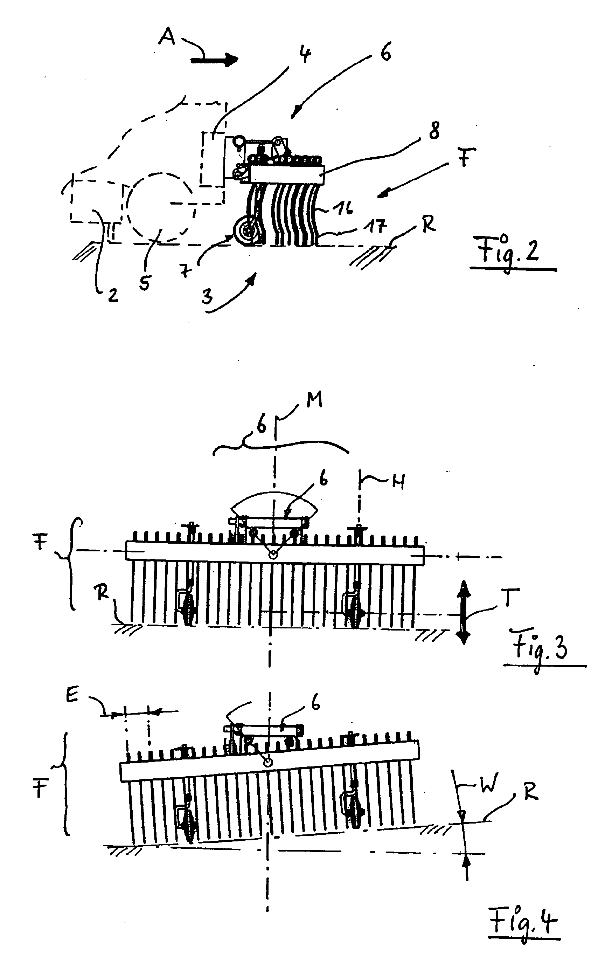

Die Konstruktion der Federzinkenharke F sieht vor, dass diese im Bereich einer vorderseitigen Standard-Kupplung 4 (Fig. 5; Schnellkupplung 29 mit Verbinder 30 zur Federzinkenharke F) mit der Maschine 1 so zu verbinden ist, dass die Federzinkenharke F in Gebrauchsstellung (Fig. 2) insbesondere vor den Stützrädern 5 der Maschine 1 und auch vor dem in Arbeitsrichtung gemäß Pfeil A nachgeordneten Mähwerk 2 wirksam wird.

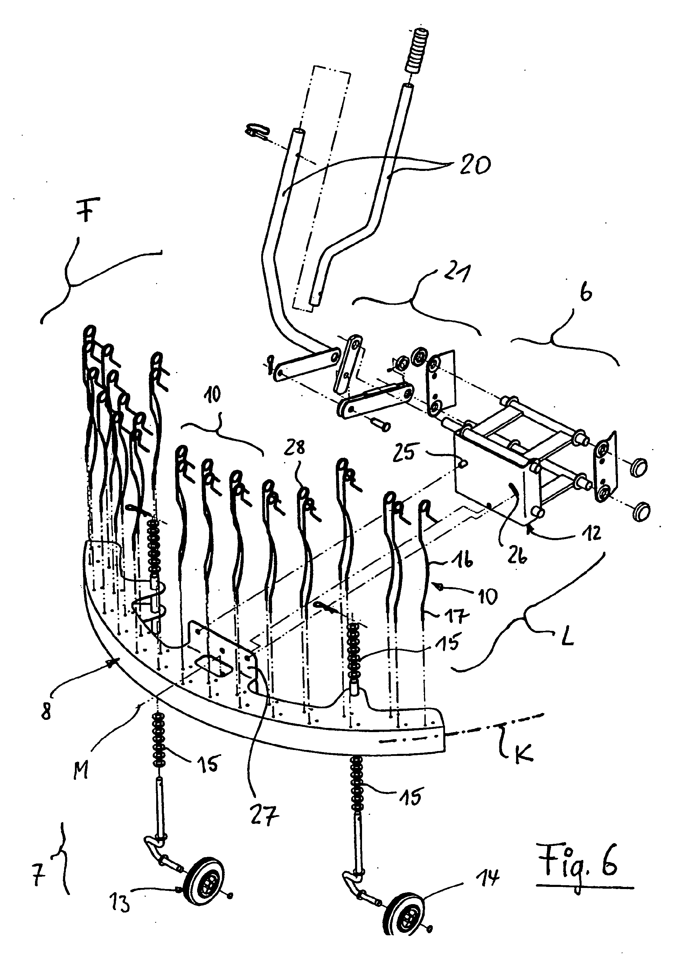

Für eine optimale Festlegung der Federzinkenharke F im Bereich der Kupplung 4 ist ein als Parallelogramm-Lenkträger 6 ausgebildeter Adapter vorgesehen, der seinerseits in die Kupplung 4 der Maschine 1 einhängbar ist. Für eine optimale Bedienung dieses Systems ist vorgesehen, dass die im Bereich der Kupplung 4 eingehangene Federzinkenharke F vom Fahrersitz (nicht dargestellt) der Maschine 1 aus bedienbar ist. Dazu ist ein in Fig. 5 und Fig. 6 dargestellter Bedienhebel 20 vorgesehen, der mittels einer Kniehebel-Mechanik 21 (Fig. 6) am Lenkträger 6 angreift.

Für die Anpassung des als Rasenbearbeitungsmaschine ausgebildeten Pflegegerätes 1 an unterschiedliche Einsatzgebiete ist vorgesehen, dass die Federzinkenharke F im Bereich des Parallelogramm-Lenkträgers 6 eine Einstellbarkeit aufweisen kann, derart, dass horizontale und/oder vertikale Einstellmöglichkeiten eröffnet sind (nicht dargestellt). Aus den Darstellungen gemäß Fig. 1 bis 6 wird deutlich, dass die in Einbaulage gehaltene Federzinkenharke F mittels zumindest eines als Rad, Kufe o. dgl. ausgebildeten Stützelementes 7 bodenseitig abstützbar ist.

Die Federzinkenharke F ist mit zumindest einer in Längsrichtung des Tragbalkens 8 verlaufenden Reihe 9 von Federzinken 10 versehen. Aus Fig. 1 und Fig. 6 wird deutlich, dass am Tragbalken 8 mehrere parallel und auf Lücke zueinander versetzte Reihen 9, 9' der Federzinken 10 vorgesehen sind. Eine optimale Ausführung dieser Federzinkenharke F sieht vor, dass die Federzinken 10 weitgehend ohne zusätzliche Verbindungsteile unmittelbar formschlüssig am Tragbalken 8 festgelegt sind, so dass ein selbsthemmender Verbindungsaufbau erreicht ist und damit ein problemloser Wechsel auch einzelner der Federzinken 10 durchgeführt werden kann.

Für eine optimale Festlegung dieses Vertikutierers 3 an der Maschine 1 weist der Tragbalken 8 im Verbindungsbereich zum Parallelogramm-Lenkträger 6 ein allgemein mit 12 bezeichnetes Trägerblech auf (Fig. 6). Mit dieser Ausführung ist der Aufbau einer mit der Kupplung 4 (Fig. 5) der Maschine 1 zusammenwirkenden Federverbindung so möglich, dass mittels einer Zugfeder o. dgl. das Einhängen des Parallelogramm-Lenkträgers 6 in die Kupplung 4 verbessert wird. Mittels einer Federkraft kann der Lenkträger 6 nach oben gezogen werden und so für die Verbindung mit der Kupplung 4 in einer optimalen Höhe gehalten werden.

Die Perspektivdarstellung gemäß Fig. 1 verdeutlicht, dass der zur Längsmittelebene M der Maschine 1 quer angeordnete Tragbalken 8 zumindest bereichsweise eine bogenförmige Längskontur K aufweist. In Abweichung zu üblicherweise eingesetzten geraden Balkenausführungen (quer zur Längsmittelebene M) ist der Tragbalken 8 in Arbeitsrichtung A konvex ausgerichtet, so dass die Handhabung des Systems mit geringem konstruktivem Aufwand verbessert ist. Auch bei dieser "gebogenen Konstruktion" ist vorgesehen, dass die Federzinken 10 in Längsrichtung des Tragbalkens 8 jeweils konstante Einbauabstände E (Fig. 4) aufweisen. Dabei wird deutlich, dass mit dem konvexen Tragbalken 8 die jeweils außen liegenden Federzinken 10 in jeder Bearbeitungslage optimal wirksam sind.

Aus den Darstellungen gemäß Fig. 3 und 4 wird deutlich, dass die Federzinkenharke F im Bereich des Tragbalkens 8 zwei spiegelbildlich zur Längsmittelebene M angeordnete Schwenk-Räder 13, 14 als Stützelemente 7 aufweist. Diese sind dabei nach Art von einstellbaren Bodentastern so ausgebildet, dass entsprechend der vorgesehenen Anwendung des Systems horizontale und/oder vertikale Veränderungen der Arbeitslage der Federzinken 10 möglich sind. Dazu können im Bereich der Stützräder und/oder des Stützträgers 6 entsprechende Stellbewegungen vorgesehen sein (nicht dargestellt).

In der dargestellten Ausführung sind die Schwenk-Räder 13, 14 durch Unterlegscheiben o. dgl. Distanzstücke 15 in Richtung einer vertikalen Hochachse H verstellbar. Mit dieser vergleichsweise einfachen Konstruktion wird erreicht, dass eine stufenweise Einstellung der Arbeitstiefe bzw. des Anpressdruckes der Federzinken 10 möglich wird (Pfeil T, Fig. 3).

In der dargestellten Ausführung zeichnet sich die Stützkonstruktion auch dadurch aus, dass die als Bodentaster vorgesehenen Stützräder 13, 14 in Arbeitsrichtung A hinter der Reihe der Federzinken 10 wirksam werden. Ebenso ist denkbar, dass diese oder zusätzliche Bodentaster seitlich neben den Reihen der Federzinken 10 angeordnet werden (nicht dargestellt).

Aus der Veranschaulichung unterschiedlicher Gebrauchslagen gemäß Fig. 3 und 4 wird deutlich, dass die Federzinkenharke F im Bereich der Kupplung 4 bzw. des Parallelogramm-Lenkträgers 6 mit einer zum Ausgleich von Bodenunebenheiten bzw. Neigungen der Arbeitsfläche R (Winkel W) vorgesehenen Axiallagerung L (Fig. 6) versehen sein kann. Durch diesen Ausgleich der Bodenunebenheiten W in Längsrichtung M des Rasentraktors 1 ist eine gleichmäßige Bearbeitung gewährleistet. In einfachster Ausführung sieht das Konzept vor, dass die Axiallagerung L im Bereich des Tragbleches 12 mit zwei Langlöchern 25, 26 versehen ist und mit entsprechenden Befestigungselementen (Schraube-Mutter-Prinzip bzw. Steckbolzen) eine einstellbare bzw. schwenkbare Halterung aufgebaut wird. Damit können variable Verschwenkungsmöglichkeiten der Federzinkenharke F vorgegeben werden, wobei insbesondere die Winkelverstellung W (Fig. 4) möglich ist. Durch entsprechende Anschlagteile bzw. die Länge der Langlöcher 25, 26 kann der Schwenkweg begrenzt sein, und durch entsprechende Dämpfungselemente bzw. Kunststoffscheiben sind die Gleiteigenschaften des Schwenksystems so optimiert, dass die Federzinkenharke F im Bereich ihrer Stützplatte 27 eine stabile Verbindung zum Tragblech 12 bildet (Fig. 6).

Die am Tragbalken 8 gehaltenen Federzinken 10 sind in ihrer Kontur so gefertigt, dass eine in Arbeitsrichtung A optimale Krümmung 16 im Bereich des frei abragenden Borstenteils 17 definiert ist. Im Falle der Belastung dieser elastisch reagierenden Borstenteile 17 bei Bewegung des Systems in Fahrtrichtung A kommt es zu einer elastischen Verformung bzw. Streckung im Bereich dieser bogenförmigen Krümmung 16, und die Federzinken 10 greifen optimal in den Boden ein. Bei einer denkbaren Rückwärtsfahrt entgegen der Fahrtrichtung A erfolgt eine Deformation im Bereich der Bogenkrümmung 16, derart, dass die Federzinken 10 vergleichsweise weich in den Boden R eingreifen und damit ungewollter Bruch des Materials im Bereich der Borstenteile 17 vermieden ist.

Ebenso ist denkbar, dass die Kontur der Federzinken 10 im Bereich der oberen Stützkontur 28 (Fig. 6) bzw. der Krümmung 16 variiert wird. Damit kann eine stärkere Bearbeitung des Bodens durch tieferes Eindringen erreicht werden, und diese Optimierung der Federzinken 10 bzw. deren Konturabschnitte kann auch so gestaltet sein, dass eine stechende oder führende Wirkung der Federzinken 10 erreicht wird. Diese konstruktiven Anpassungen können dann erforderlich werden, wenn die erfindungsgemäße Federzinkenharke F für nicht näher beschriebene landwirtschaftliche Bodenbearbeitungen verwendet wird, wobei neben der Konturierung der Federzinken 10 auch deren Anzahl und Anordnung auf dem gebogenen Tragbalken 8 eine Vielzahl von Variationen aufweisen kann.

## Patentansprüche

1. Landschaftspflegegerät in Form eines Rasentraktors, einer Kehrmaschine, mit einem als Mähwerk oder Kehrbesen ausgebildeten ersten Pflegewerkzeug (2) und zumindest einem mit diesem gleichzeitig oder zeitversetzt wirkenden zweiten Pflegewerkzeug (3) in Form eines Vertikutierers, wobei dieser im Bereich vor dem ersten Pflegewerkzeug (2) mit zumindest einer vom Fahrersitz aus bedienbaren Federzinkenharke (F) als das zweite Pflegewerkzeug (3) versehen ist, **dadurch gekennzeichnet, dass** die Federzinkenharke (F) zumindest eine in Längsrichtung eines Tragbalkens (8) verlaufende Reihe (9) von Federzinken (10) aufweist und dieser quer zur Längsmittelebene (M) angeordnete Tragbalken (8) zumindest bereichsweise mit einer bogenförmigen Längskontur (K) versehen ist, wobei die Federzinkenharke (F) im Bereich einer Stützplatte (27) mit einem als Parallelogramm-Lenkträger (6) ausgebildeten Adapter zusammenwirkt und dieser in eine Kupplung (4) der Maschine (1) einhängbar ist.

2. Landschaftspflegegerät nach Anspruch 1, **dadurch gekennzeichnet, dass** dieses im Bereich einer vorderseitig vorgesehenen Standard-Kupplung (4) den Tragbalken (8) mit dem Parallelogramm-Lenker (6) aufweist.

3. Landschaftspflegegerät nach Anspruch 1 oder 2, **dadurch gekennzeichnet, dass** der Tragbalken (8) im Bereich des Parallelogramm-Lenkträgers (6) einstellbar gehalten ist.

4. Landschaftspflegegerät nach einem der Ansprüche 1 bis 3, **dadurch gekennzeichnet, dass** die Federzinkenharke (F) im Bereich der Kupplung (4) bzw. des Parallelogramm-Lenkträgers (6) eine zum Ausgleich von Bodenunebenheiten, Schrägstellungen o. dgl. Lageabweichungen (Winkel W) vorgesehen Axiallagerung (L) aufweist.

5. Landschaftspflegegerät nach einem der Ansprüche 1 bis 4, **dadurch gekennzeichnet, dass** der Tragbalken (8) in Arbeitsrichtung (A) konvex ausgebildet ist.

6. Landschaftspflegegerät nach einem der Ansprüche 1 bis 5, **dadurch gekennzeichnet, dass** am Tragbalken (8) mehrere parallele und/oder auf Lücke zueinander versetzte Reihen (9, 9') der Federzinken (10) vorgesehen sind.

7. Landschaftspflegegerät nach einem der Ansprüche 1 bis 6, **dadurch gekennzeichnet, dass** die Federzinken (10) in Längsrichtung des Tragbalkens (8) konstante Einbauabstände (E) aufweisen.

8. Landschaftspflegegerät nach einem der Ansprüche 1 bis 7, **dadurch gekennzeichnet, dass** mit dem konvexen Tragbalken (8) die jeweils außen liegenden Federzinken (10) optimal wirksam sind.

9. Landschaftspflegegerät nach einem der Ansprüche 1 bis 8, **dadurch gekennzeichnet, dass** die am Tragbalken (8) gehaltenen Federzinken (10) im Bereich eines frei abragenden Borstenteils (17) eine in Arbeitsrichtung (A) optimal einstellbare Krümmung (16) aufweisen.

10. Landschaftspflegegerät nach einem der Ansprüche 1 bis 9, **dadurch gekennzeichnet, dass** die Federzinken (10) ohne zusätzliche Verbindungsteile selbsthemmend am Tragbalken (8) festlegbar und damit auswechselbar sind.

11. Landschaftspflegegerät nach einem der Ansprüche 1 bis 10, **dadurch gekennzeichnet, dass** im Verbindungsbereich von Tragbalken (8) und Parallelogramm-Lenkträger (6) zumindest ein die Stützplatte (27) aufnehmendes Trägerblech (12) vorgesehen ist.

12. Landschaftspflegegerät nach Anspruch 11, **dadurch gekennzeichnet, dass** im menwirkende Bauteilverbindung vorgesehen ist.

13. Landschaftspflegegerät nach einem der Ansprüche 1 bis 12, **dadurch gekennzeichnet, dass** der in Einbaulage gehaltene Tragbalken (8) mittels zumindest eines als Rad, Kufe o. dgl. ausgebildeten Stützelementes (7) bodenseitig abstützbar ist.

14. Landschaftspflegegerät nach Anspruch 13, **dadurch gekennzeichnet, dass** die Federzinkenharke (F) im Bereich des Tragbalkens (8) zwei spiegelbildlich zur Längsmittelebene (M) angeordnete Schwenk-Räder (13, 14) aufweist.

15. Landschaftspflegegerät nach Anspruch 13 oder 14, **dadurch gekennzeichnet, dass** die Schwenk-Räder (13, 14) als stufenlos oder gestuft verstellbare Bodentaster vorgesehen sind.

16. Landschaftspflegegerät nach einem der Ansprüche 13 bis 15, **dadurch gekennzeichnet, dass** die Schwenk-Räder (13, 14) durch Unterlegscheiben o. dgl. Distanzstücke (15) auf variable Höhen (H) einstellbar sind, derart, dass eine stufenweise Einstellung einer Arbeitstiefe bzw. eines Anpressdruckes (T) der Federzinken (10) erreichbar ist.

17. Landschaftspflegegerät nach einem der Ansprüche 13 bis 16, **dadurch gekennzeichnet, dass** der zumindest eine Bodentaster in Arbeitsrichtung (A) hinter den Reihen (9, 9') der Federzinken (10) angeordnet ist.

18. Landschaftspflegegerät nach einem der Ansprüche 13 bis 17, **dadurch gekennzeichnet, dass** die Bodentaster seitlich neben den Reihen der Federzinken (10) angeordnet sind.

## Claims

1. Landscape maintenance machine in the form of a lawn tractor or sweeping machine, having a first maintaining appliance (2) in the form of a mowing mechanism or sweeping brush and at least one second maintaining appliance (3) in the form of a de-thatcher which operates simultaneously therewith or at a different time therefrom, the de-thatcher being provided, in the region in front of the first maintaining appliance (2), with at least one rake (F) of resilient tines which can be operated from the driver's seat and which forms the second maintaining appliance (3), **characterised in that** the rake (F) of resilient tines has at least one row (9) of resilient tines (10) which extends in the longitudinal direction of a support bar (8) and this support bar (8), which is arranged transversely to the longitudinal centre plane (M), is given an arcuate longitudinal outline (K) at least in a region or regions, the rake (F) of resilient tines co-operating in the region of a supporting plate (27) with an adapter in the form of a parallelogram linkage carrier (6) and this adapter being able to be hooked onto a coupling (4) belonging to the machine (1).

2. Landscape maintenance machine according to claim 1, **characterised in that** it has the support bar (8) having the parallelogram linkage (6) in the region of a standard coupling (4) which is provided at its front end.

3. Landscape maintenance machine according to claim 1 or 2, **characterised in that** the support bar (8) is held in such a way that it can be set in the region of the parallelogram linkage carrier (6).

4. Landscape maintenance machine according to one of claims 1 to 3, **characterised in that**, in the region of the coupling (4) or the parallelogram linkage carrier (6), the rake (F) of resilient tines has an axial mounting assembly (L) intended to compensate for unevennesses in the ground, tilts or the like changes in position (angle W).

5. Landscape maintenance machine according to one of claims 1 to 4, **characterised in that** the support bar (8) is of a convex configuration in the direction of working (A).

6. Landscape maintenance machine according to one of claims 1 to 5, **characterised in that** a plurality of rows (9, 9') of resilient tines (10) which are parallel nd/or staggered relative to one another are provided on the support bar (8).

7. Landscape maintenance machine according to one of claims 1 to 6, **characterised in that** the resilient tines (10) are at constant installed intervals (E) in the longitudinal direction of the support bar (8)

8. Landscape maintenance machine according to one of claims 1 to 7, **characterised in that**, with the convex support bar (8), it is the resilient tines (10) which are situated on the outside at any time which operate in the optimum way.

9. Landscape maintenance machine according to one of claims 1 to 8, **characterised in that**, in the region of a freely projecting brush part (17), the resilient tines (10) held in the support bar (8) have a curvature (16) which can be set to be optimum in the direction of working (A).

10. Landscape maintenance machine according to one of claims 1 to 9, **characterised in that** the resilient tines (10) can be fixed to the support bar (8) by a self-locking action and are thus replaceable, without any additional connecting parts.

11. Landscape maintenance machine according to one of claims 1 to 10, **characterised in that** at least one carrier plate (12) which receives the supporting plate (27) is provided in the region of the connection between the support bar (8) and the parallelogram linkage carrier (6).

12. Landscape maintenance machine according to claim 11, **characterised in that** a component connection which co-operates with the coupling (4) by means of a resilient connection is provided in the region of the connection.

13. Landscape maintenance machine according to one of claims 1 to 12, **characterised in that**, when held in the installed position, the support bar (8) can be supported on the ground by means of at least one supporting member (7) in the form of a wheel, skid or the like.

14. Landscape maintenance machine according to claim 13, **characterised in that**, in the region of the support bar (8), the rake (F) of resilient tines has two pivoting wheels (13, 14) which are arranged as mirror images about the longitudinal centre plane (M).

15. Landscape maintenance machine according to claim 13 or 14, **characterised in that** the pivoting wheels (13, 14) are intended as ground sensors which can be adjusted steplessly or in steps.

16. Landscape maintenance machine according to one of claims 13 to 15, **characterised in that** the pivoting wheels (13, 14) can be set to variable heights (H) by washers or the like distance pieces (15), in such a way that setting in steps can be achieved for the working depth of, or applied pressure (T) from, the resilient tines (10).

17. Landscape maintenance machine according to one of claims 13 to 16, **characterised in that** the at least one ground sensor is arranged behind the rows (9, 9') of resilient tines (10) in the direction of working (A).

18. Landscape maintenance machine according to one of claims 13 to 17, **characterised in that** the ground sensors are laterally arranged next to the rows of resilient tines (10).

## Revendications

1. Appareil pour l'entretien paysager sous la forme d'un tracteur-tondeuse, d'une balayeuse avec un premier outil d'entretien (2) réalisé comme une barre de coupe ou un balai et au moins un second outil d'entretien (3) agissant simultanément ou en décalé de celui-ci sous la forme d'un scarificateur, celui-ci étant pourvu, dans la zone devant le premier outil d'entretien (2), d'au moins un râteau à dents élastiques (F) manipulable depuis le siège du conducteur en guise de second outil d'entretien (3), **caractérisé en ce que** le râteau à dents élastiques (F) présente au moins une rangée (9) de dents élastiques (10) s'étendant dans le sens longitudinal d'une poutre porteuse (8) et cette poutre porteuse (8) disposée transversalement au plan médian longitudinal (M) est pourvue au moins par endroits d'un contour longitudinal (K) arqué, le râteau à dents de ressort (F) coagissant dans la zone d'une plaque d'appui (27) avec un adaptateur réalisé comme un support de bras oscillant transversal en parallélogramme et celui-ci pouvant être accroché dans un couplage (4) de la machine (1).

2. Appareil pour l'entretien paysager selon la revendication 1, **caractérisé en ce que** celui-ci présente, dans la zone d'un couplage standard (4) prévu côté avant, la poutre porteuse (8) avec le bras oscillant transversal en parallélogramme (6).

3. Appareil pour l'entretien paysager selon la revendication 1 ou 2, **caractérisé en ce que** la poutre porteuse (8) est maintenue réglable dans la zone du support de bras oscillant transversal en parallélogramme (6).

4. Appareil pour l'entretien paysager selon l'une quelconque des revendications 1 à 3, **caractérisé en ce que** le râteau à dents élastiques (F) présente, dans la zone du couplage (4) ou du support de bras oscillant transversal en parallélogramme (6), un logement axial (L) prévu pour la compensation d'inégalités de sol, de positions obliques ou de divergences de position similaires (angle W).

5. Appareil pour l'entretien paysager selon l'une quelconque des revendications 1 à 4, **caractérisé en ce que** la poutre porteuse (8) est réalisée convexe dans le sens de travail (A).

6. Appareil pour l'entretien paysager selon l'une quelconque des revendications 1 à 5, **caractérisé en ce que** plusieurs rangées (9, 9') de dents élastiques (10) parallèles et/ou déportées les unes par rapport aux autres sur des trous sont prévues sur la poutre porteuse (8).

7. Appareil pour l'entretien paysager selon l'une quelconque des revendications 1 à 6, **caractérisé en ce que** les dents élastiques (10) présentent dans le sens longitudinal de la poutre porteuse (8) des distances d'installation (E) constantes.

8. Appareil pour l'entretien paysager selon l'une quelconque des revendications 1 à 7, **caractérisé en ce que** les dents élastiques (10) se trouvant respectivement à l'extérieur agissent de manière optimale avec la poutre porteuse (8) convexe.

9. Appareil pour l'entretien paysager selon l'une quelconque des revendications 1 à 8, **caractérisé en ce que** les dents élastiques (10) maintenues sur la poutre porteuse (8) présentent, dans la zone d'une partie de soies (17) dépassant librement, une courbure (16) réglable de manière optimale dans le sens de travail (A).

10. Appareil pour l'entretien paysager selon l'une quelconque des revendications 1 à 9, **caractérisé en ce que** les dents élastiques (10) peuvent être fixées sans partie de liaison supplémentaire par autoblocage sur la poutre porteuse (8) et sont ainsi interchangeables.

11. Appareil pour l'entretien paysager selon l'une quelconque des revendications 1 à 10, **caractérisé en ce qu'**au moins une tôle porteuse (12) recevant la plaque d'appui (27) est prévue dans la zone de liaison de la poutre porteuse (8) et du support de bras oscillant transversal en parallélogramme (6).

12. Appareil pour l'entretien paysager selon la revendication 11, **caractérisé en ce qu'**une liaison de composant coagissant avec le couplage (4) par une liaison élastique est prévue dans la zone de liaison.

13. Appareil pour l'entretien paysager selon l'une quelconque des revendications 1 à 12, **caractérisé en ce que** la poutre porteuse (8) maintenue en position d'installation peut être en appui côté sol à l'aide d'au moins un élément d'appui (7) réalisé comme une roue, un patin ou similaire.

14. Appareil pour l'entretien paysager selon la revendication 13, **caractérisé en ce que** le râteau à dents élastiques (F) présente, dans la zone de la poutre porteuse (8), deux roues de pivotement (13, 14) disposées de manière inversée par rapport au plan médian longitudinal (M).

15. Appareil pour l'entretien paysager selon la revendication 13 ou 14, **caractérisé en ce que** les roues de pivotement (13, 14) sont prévues comme des palpeurs de sol réglables en continu ou progressivement.

16. Appareil pour l'entretien paysager selon l'une quelconque des revendications 13 à 15, **caractérisé en ce que** les roues de pivotement (13, 14) sont réglables par des rondelles ou pièces d'écartement similaires (15) à des hauteurs variables (H) de telle manière qu'une profondeur de travail ou une pression de serrage (T) des dents élastiques (10) puisse être réglée progressivement.

17. Appareil pour l'entretien paysager selon l'une quelconque des revendications 13 à 16, **caractérisé en ce que** l'au moins un palpeur de sol est disposé dans le sens de travail (A) derrière les rangées (9, 9') de dents élastiques (10).

18. Appareil pour l'entretien paysager selon l'une quelconque des revendications 13 à 17, **caractérisé en ce que** les palpeurs de sol sont disposés latéralement à côté des rangées de dents élastiques (10).
